# EUROPÄISCHE PATENTSCHRIFT

(11) **EP 2 598 579 B1**
(45) Veröffentlichungstag und Bekanntmachung des Hinweises auf die Patenterteilung: **11.09.2024**
(21) Anmeldenummer: 11763837.9
(22) Anmeldetag: 28.07.2011
(51) Int. Cl.: C09C 1/02, B82Y 30/00, C01F 11/18, C08K 3/26, D21H 17/67, D21H 17/69, D21H 19/38, D21H 21/52

(54) **KUGELFÖRMIGE, AMORPHE CALCIUMCARBONAT-TEILCHEN**
SPHERICAL AMORPHOUS CALCIUM CARBONATE PARTICLES
PARTICULES DE CARBONATE DE CALCIUM AMORPHES SPHÉRIQUES

(30) Priorität: 30.07.2010 EP 10007959
(43) Veröffentlichungstag der Anmeldung: 05.06.2013
(73) Patentinhaber: Schaefer Kalk GmbH & Co. KG, 65582 Diez (DE)
(72) Erfinder: VUCAK, Marijan, 65624 Altendiez (DE); NOVER, Christoph, 47495 Rheinberg (DE)
(74) Vertreter: Mai Besier
(86) Internationale Anmeldenummer: PCT/EP2011/003792
(87) Internationale Veröffentlichungsnummer: WO 2012/013349

(56) Entgegenhaltungen:
- WO-A2-2008/122358
- US-A1- 2008 227 901
- M. FAATZ ET AL: "Mineralization of calcium carbonate by controlled release of carbonate in aqueous solution", MATERIALS SCIENCE AND ENGINEERING C., vol. 25, no. 2, 1 April 2005 (2005-04-01), CH, pages 153 - 159, XP055550210, ISSN: 0928-4931, DOI: 10.1016/j.msec.2005.01.005
- BAPTISTE GUILLEMET ET AL: "Nanosized Amorphous Calcium Carbonate Stabilized by Poly(ethylene oxide)- b -poly(acrylic acid) Block Copolymers", LANGMUIR, vol. 22, no. 4, 1 February 2006 (2006-02-01), US, pages 1875 - 1879, XP055451370, ISSN: 0743-7463, DOI: 10.1021/la052419e
- SHU-CHEN HUANG ET AL: "A Carbonate Controlled-Addition Method for Amorphous Calcium Carbonate Spheres Stabilized by Poly(acrylic acid)s", LANGMUIR, vol. 23, no. 24, 1 November 2007 (2007-11-01), US, pages 12086 - 12095, XP055451087, ISSN: 0743-7463, DOI: 10.1021/la701972n
- ABDEL-AAL N ET AL: "Inhibition of adhesion and precipitation of CaCO3 by aminopolyphosphonate", JOURNAL OF CRYSTAL GROWTH, ELSEVIER, AMSTERDAM, NL, vol. 256, no. 1-2, 1 August 2003 (2003-08-01), pages 188 - 200, XP004438666, ISSN: 0022-0248, DOI: 10.1016/S0022-0248(03)01354-X
- R. PAIRAT AND C. SUMEATH, F. HENRY BROWNING AND H. SCOTT FOGLER: "Precipitation and Dissolution of Calcium-ATMPS Precipitates for the Inhibition of Scale Formation in Porous Media", LANGMUIR, vol. 13, 19 March 1997 (1997-03-19), pages 1791 - 1798, XP002609252
- A.-W. XU, Q. YU, W.-F. DONG, M. ANTONIETTI AND H. CÖLFEN: "Stable Amorphous CaCO3 Microparticles with Hollow Spherical Superstructures Stabilized by Phytic Acid", ADVANCED MATERIALS, vol. 17, no. 18, September 2005 (2005-09-01), pages 2217 - 2221, XP002609253

## Beschreibung

Die vorliegende Erfindung betrifft amorphe, kugelförmige Calciumcarbonat-Teilchen, Verfahren zu ihrer Herstellung sowie ihre Verwendung.

Calciumcarbonat, CaCO₃, ist ein Calcium-Salz der Kohlensäure, das heutzutage in vielen Bereichen des täglichen Lebens Anwendung findet. So wird es insbesondere als Additiv oder Modifizierungsmittel in Papier, Farben, Kunststoffen, Tinten, Klebstoffen und Pharmazeutika eingesetzt. In Kunststoffen dient Calciumcarbonat vorrangig als funktioneller Füllstoff, um das vergleichsweise teure Polymer zu ersetzen, mechanische oder optische Eigenschaften zu verbessern und/oder die Verarbeitung zu erleichtern.

In der Natur tritt Calciumcarbonat in verschiedenen Phasen in Erscheinung. Prinzipiell wird zwischen den wasserhaltigen und den wasserfreien Phasen differenziert. Calcit, Vaterit und Aragonit sind Strukturen ohne Einlagerung von Wasser und weisen die gleiche Stöchiometrie auf (Polymorphie). Des Weiteren existieren zwei kristalline Hydratphasen von Calciumcarbonat: Das Monohydrat und ein Hexahydrat (Ikait).

Neben den kristallinen Formen ist auch amorphes Calciumcarbonat (ACC) bekannt. ACC ist eine metastabile Phase, welche mit variablem Wassergehalt auftritt und bei welcher die Atome keine geordneten Strukturen, sondern ein unregelmäßiges Muster ausbilden und daher nur über eine Nahordnung, nicht aber über eine Fernordnung verfügen. ACC ist instabil und wandelt sich bei Temperaturen oberhalb von 300°C in Calcit um. Durch die Gegenwart von Wasser wird dieser Prozess beschleunigt und die Kristallisation findet schon bei niedrigeren Temperaturen statt.

ACC kann ausgehend von vielen, verschiedenen Ausgangsmaterialien unter vielen, verschiedenen Reaktionsbedingungen hergestellt werden, z. B. aus einer Calciumchlorid-Lösung, die mit Natriumhydrogencarbonat in der Gegenwart von Magnesiumionen, mit Ammoniumcarbonat oder mit Natriumcarbonat umgesetzt wird, oder durch Hydrolyse von Dimethylcarbonat in einer Calciumchlorid-Lösung.

Die letzte Route wird insbesondere in der Dissertation M. Faatz *Kontrollierte Fällung von amorphem Calciumcarbonat durch homogene Carbonatfreisetzung* Johannes Gutenberg-Universität Mainz 2005 diskutiert, wobei zwei Synthesevarianten genauer untersucnt werden:
Zum einen werden in 100 ml wässriger Lösung 0,001 mol Calciumchlorid mit 0,001 mol Dimethylcarbonat in Gegenwart von 0,002 mol Natriumhydroxid umgesetzt. Alternativ werden in 100 ml wässriger Lösung 0,001 mol Calciumchlorid mit 0,005 mol Dimethylcarbonat in Gegenwart von 0,010 mol Natriumhydroxid zur Reaktion gebracht. Die erhaltenen Niederschläge werden jeweils abgetrennt und getrocknet, wobei genauere Angaben zur Trocknung fehlen. Beide Wege führen zu mehr oder weniger kugelförmigen amorphen Calciumcarbonat-Teilchen, die einen Restwassergehalt von 0,4 mol bis 0,6 mol eingelagertes Wasser, bezogen auf 1 mol Calciumcarbonat, bzw. von 7 Gew.-% bis 10 Gew.-% Wasser, bezogen auf das Gesamtgewicht, aufweisen.

Im Rahmen dieser Arbeit wurde auch die Eignung der ACC-Partikel als Füllstoff in ultra-hochmolekularen Polyethylen (UHMW-PE) untersucht, wobei die Partikel zur Vermeidung von Kettenspaltungen in situ in den wachsenden Polymerketten dispergiert wurden. Die auf diese Weise erhaltenden gefüllten Polymere besitzen einen Schmelzpeak im Bereich von 137°C bis 139°C, der kleiner als der des reinen UHMW-PE (146°C) ist.

Eine Weiterentwicklung dieser kugelförmigen, amorphen Calciumcarbonat-Teilchen wird in der Patentanmeldung WO 2008/122358 beschrieben, die kugelförmige Calciumcarbonat-Teilchen mit einem mittleren Teilchendurchmesser im Bereich von 0,05 µm bis 2,0 µm und einem Wassergehalt (Restfeuchte bei 105°C) von höchstens 5,0 Gew.-%, bezogen auf ihr Gesamtgewicht, und einem verbesserten Eigenschaftsspektrum offenbart.

Die Calciumcarbonat-Teilchen werden durch Umsetzung von Calciumchlorid mit Dialkylcarbonat in Gegenwart eines Alkalimetallhydroxyds in wässriger Lösung erhalten, wobei man die Komponenten zweckmäßigerweise in folgenden Konzentrationen einsetzt:

| | |
|---|---|
| a) CaCl₂: | >10 mmol/l bis 50 mmol/l; |
| b) Dialkylcarbonat: | >10 mmol/l bis 50 mmol/l; |
| c) Alkalimetallhydroxid: | 20 mmol/l bis 100 mmol/l. |

Sie eignen sich insbesondere als Additiv oder Modifizierungsmittel in Papier, Farben, Kunststoffen, Tinten, Klebstoffen und Pharmazeutika.

Allerdings ist die Stabilität der amorphen Calciumcarbonat-Teilchen von Faatz sowie der amorphen Calciumcarbonat-Teilchen der WO 2008/122358 beschränkt, da sich diese mit der Zeit in kristalline Modifikationen umwandeln. So ist die Stabilität dieser Teilchen in der Reaktionslösung äußerst begrenzt und liegt üblicherweise nur in einem Bereich von einigen Minuten bis Stunden. Ihre Anwendung als Additiv oder Modifizierungsmittel erfordert daher eine rasche Weiterverarbeitung, welches sich insbesondere im großtechnischen Maßstab meist nur schwer, wenn überhaupt realisieren lässt.

Die Stabilität der isolierten und getrockneten Calciumcarbonat-Teilchen von Faatz oder der WO 2008/122358 ist zwar etwas besser, aber immer noch zeitlich begrenzt. Vom technischen Standpunkt sind daher Calciumcarbonat-Teilchen mit einer verbesserten Langzeitstabilität wünschenswert.

Darüber hinaus weisen die bekannten Calciumcarbonat-Teilchen eine sehr hohe Basizität auf, die ihren Einsatz in vielen Anwendungsgebieten erschwert oder gar unmöglich macht.

Weiterhin ist aus der europäischen Patentanmeldung EP 1 151 966 A1 ein Verfahren zum Herstellen von stabilem, plättchenförmigem, calcitischem Calciumcarbonat mit einem granulometrischen Faktor von etwa 0,5 bis 1 und einem mittleren Partikeldurchmesser von etwa 0,5 bis 1,5 µm mit folgenden Schritten bekannt:
▪ Calciumhydroxid in wässriger Suspension wird unter Einleiten von CO₂ und einem Energieeintrag von etwa 25 bis 200 kW/m³ zu basischem Calciumcarbonat umgesetzt,
▪ in der Suspension werden als oberflächenaktive Stoffe ein oder mehrere Additive der Gruppe, bestehend aus organisch substituierten Phosphonaten, Polycarboxylaten oder doppel-hydrophilen Blockcopolymeren mit etwa 0,5 bis 5 Gew.-%, bezogen auf das Calciumcarbonat, unter Rühren verteilt,
▪ zusätzlich zur Zugabe der oberflächenaktiven Stoffe wird weiteres CO₂ vergleichsweise langsam in die Suspension eingeleitet und
▪ das so gebildete calcitische Calciumcarbonat wird abfiltriert.

Amorphes Calciumcarbonat wird in dieser Druckschrift jedoch nicht erwähnt.

Die Publikation N. Abdel-Aal, K. Sawada Inhibition of adhesion and precipitation of CaCO3 by aminopolyphosphonate Journal of Crystal Growth 256 (2003) 188 - 200 beschäftigt sich mit dem Einfluss von Ethylendiamin-N,N,N',N'-tetrakis-methylenphosphonsäure (EDTMP) auf die Bildungs- und Umwandlungsprozesse von Calciumcarbonat, das an der Oberfläche anhaftet und in Lösung ausgefällt wurde. Dabei wurden der Einfluss von EDTMP auf die Menge, die Geschwindigkeiten und die Adhäsionszeiten unter verschiedenen EDTMP-Konzentrationen untersucht. Weiterhin wurde der Einfluss der Calciumkonzentration in der Lösung auf diese Reaktionen studiert.

Zu diesem Zweck wurde eine bestimmter Menge einer Calciumchlorid-Lösung schnell zu einer Natriumcarbonat-Lösung gegeben, die ihrerseits bereits eine vorgegebene Menge EDTMP enthielt. Bei der Mischung der Lösungen bildete sich jeweils sofort ein Niederschlag.

In die Reaktionslösung wurden QCM-Sensoren eingetaucht und hinterher mittels Rastertunnelmikroskopie und mittels Röntgenbeugung untersucht. Dabei wurden bei der niedrigsten vorgelegten EDTMP-Konzentration (10⁻⁶ mol/l) kugelförmige Calcitpartikel mit einer Größe von ungefähr 9 µm erhalten (Fig. 6). Bei einer EDTMP-Konzentration von 10⁻⁵ mol/l wurden kugelförmige Calcitpartikel mit einer Größe von ungefähr 8 µm erhalten (Fig. 7). Bei der höchsten EDTMP-Konzentration (10⁻⁴ mol/l) wurde die Adhäsion von Calciumcarbonat an die QCM-Sensoren stark gehemmt und es wurden eine geringe Zahl von nadelförmigen Aragonitkristallen sowie Calcit-Partikel auf den QCM-Sensoren erhalten (Fig. 8).

Die Publikation geht davon aus, dass bei der untersuchten Reaktion zumindest intermediär amorphes Calciumcarbonat gebildet wird. Dieses soll eine sehr kleine Partikelgröße und eine raue Oberfläche aufweisen (Seite 197, rechte Spalte, Zeile 9-13). Genauere Angaben zur Größe und zur Form des amorphen Calciumcarbonats sind der Druckschrift allerdings nicht zu entnehmen.

Die Veröffentlichung R. Pairat, C. Sumeath Precipitation and Dissolution of Calcium - ATMP Precipitates for the Inhibition of Scale Fomation in Porous Media Langmuir 1997, 13, 1791-1798 untersucht die Fällungsreaktion von Aminotrimethylenphosphonsäure (ATMP) und Calcium. In Abhängigkeit von den Fällungsbedingungen wird kristallines, plättchenförmiges Calciumcarbonat oder pulverförmiges, kugelförmiges, amorphes Calciumcarbonat gebildet.

Die Publikation An-Wu Xu, Qiu Yu, Wen-Fei Dong, Markus Antonietti, Helmut Cölfen Stable Amorphous CaCO3 Microparticles with Hollow Spherical Superstructures Stabilized by Phytic-Acid Adv. Mater. 2005, 17, 2217-2221 beschreibt die Umsetzung von Calciumchlorid mit Ammoniumcarbonat in Gegenwart von Phytinsäure. Dabei werden Calciumcarbonat-Hohlkugeln mit einer Größenverteilung im Bereich von 1 bis 2,8 µm erhalten, die aus nanoskaligen amorphen Calciumcarbonat-Teilchen aufgebaut sind. Die resultierenden Hohlkugeln sollen eine Stabilität größer 14 Tage aufweisen.

Vor diesem Hintergrund lag der vorliegenden Erfindung die Aufgabe zugrunde, Möglichkeiten zur Bereitstellung von amorphen Calciumcarbonat-Teilchen mit verbesserten Eigenschaften aufzuzeigen. Insbesondere sollten die Calciumcarbonat-Teilchen eine verbesserte Stabilität, bevorzugt eine verbesserte Langzeitstabilität, aufweisen und sich vorzugsweise als Füllstoff für Polymere eignen, wobei insbesondere die mechanischen Eigenschaften der Polymere durch den Zusatz des Füllstoffs möglichst nicht nachteilig beeinflusst, sondern nach Möglichkeit noch weiter verbessert werden sollten. Insbesondere sollten Calciumcarbonat-Teilchen mit einem niedrigeren pH-Wert zugänglich gemacht werden, die möglichst leicht verarbeitbar sind und in möglichst vielen Anwendungsgebieten einsetzbar sind. Weiterhin sollten die Calciumcarbonat-Teilchen auf möglichst einfache Art und Weise, möglichst großtechnisch und kostengünstig herstellbar sein.

Gelöst werden diese sowie weitere nicht konkret genannten Aufgaben, die sich aus den obigen Zusammenhängen direkt ableiten lassen, durch die Bereitstellung von kugelförmigen, amorphen Calciumcarbonat-Teilchen mit einem mittleren Teilchendurchmesser im Bereich von 0,05 µm bis 2,0 µm, wobei der Gehalt an Strukturwasser der Calciumcarbonat-Teilchen kleiner 0,4 mol pro mol Calciumcarbonat ist. Anspruch 1 beschreibt ein besonders zweckmäßiges Zwischenprodukt für die Herstellung der kugelförmigen, amorphen Calciumcarbonat-Teilchen. Die auf Anspruch 1 rückbezogenen Unteransprüche beschreiben besonders zweckmäßige Varianten dieser kugelförmigen Calciumcarbonat-Teilchen. Die übrigen Ansprüche betreffen besonders vorteilhafte Herstellungsverfahren für die erfindungsgemäßen kugelförmigen Calciumcarbonat-Teilchen und stellen besonders zweckmäßige Anwendungen der erfindungsgemäßen kugelförmigen Calciumcarbonat-Teilchen unter Schutz.

Durch die Bereitstellung von kugelförmigen, amorphen Calciumcarbonat-Teilchen mit einem mittleren Teilchendurchmesser im Bereich von 0,05 µm bis 2,0 µm, die einen Gehalt an Strukturwasser kleiner 0,4 mol pro mol Calciumcarbonat aufweisen, gelingt es auf nicht ohne weiteres vorhersehbare Weise kugelförmige, amorphe Calciumcarbonat-Teilchen mit verbessertem Eigenschaftsprofil und erhöhter Stabilität, insbesondere verbesserter Langzeitstabilität, zugänglich zu machen. Gleichzeitig sind diese Calciumcarbonat-Teilchen extrem stabil und können auf vergleichsweise einfache Art und Weise isoliert und weiterverarbeitet werden. Sie eignen sich insbesondere als Füllstoff für Polymere, da sie auf einfachste Art und Weise äußerst homogen im Polymer dispergiert werden können. Die resultierenden Polymer-Compounds zeichnen sich durch ein deutlich verbessertes Eigenschaftsspektrum aus und weisen insbesondere wesentlich verbesserte mechanische Eigenschaften auf, wie eine höhere Zugfestigkeit, ein höheres Zugmodul und eine höhere Reißdehnung sowie eine deutlich glattere Oberfläche. Der extrem geringe Restwassergehalt der erfindungsgemäßen Calciumcarbonat-Teilchen erlaubt dabei eine extreme einfache Verarbeitung der Calciumcarbonat-Teilchen. Darüber hinaus zeichnen sich die erfindungsgemäßen Calciumcarbonat-Teilchen durch eine vergleichsweise geringe Basizität aus. Ihr pH-Wert, zweckmäßigerweise gemessen nach EN ISO 787-9, ist vorzugsweise kleiner 11,5, bevorzugt kleiner 11,0, insbesondere kleiner 10,5. Dies ermöglicht eine vergleichsweise leichte Verarbeitung der erfindungsgemäßen Calciumcarbonat-Teilchen und erlaubt ihren Einsatz in allen denkbaren Bereichen, insbesondere auch in solchen Gebieten, die bisher aufgrund der zu hohen Basizität der herkömmlichen Calciumcarbonat-Teilchen nicht möglich waren.

Die stabilisierten, kugelförmigen, amorphen Calciumcarbonat-Teilchen nach Anspruch 1 sind als Zwischenprodukt für die Herstellung der Calciumcarbonat-Teilchen besonders geeignet. Die Calciumcarbonat-Teilchen nach Anspruch 1 weisen einen mittleren Teilchendurchmesser im Bereich von 0,05 µm bis 2,0 µm und einen Wassergehalt von höchstens 5,0 Gew.-%, bezogen auf ihr Gesamtgewicht und gemessen als Restfeuchte bei 200°C, auf. Sie umfassen mindestens eine Substanz, die eine Molmasse größer 100 g/mol aufweist und der Formel R-Xₙ genügt, wobei der Rest R für einen mindestens ein Kohlenstoffatom umfassenden Rest steht, der Rest X für eine Gruppe steht, die mindestens ein Sauerstoffatom sowie mindestens ein Kohlenstoffatom, Schwefelatom, Phosphoratom und/oder Stickstoffatom umfasst und n eine Zahl im Bereich von 1 bis 20 darstellt. Der Anteil von kristallinem Calciumcarbonat beträgt bei diesen Teilchen weniger als 30 Gew.-%, bezogen auf das Gesamtgewicht des Calciumcarbonats. Die spezifische Oberfläche dieser Calciumcarbonat-Teilchen ist höchstens 12 m²/g.

Auch diese Calciumcarbonat-Teilchen weisen ein verbessertes Eigenschaftsprofil und eine erhöhte Stabilität, insbesondere eine verbesserte Langzeitstabilität, auf. Dabei zeichnen sie sich insbesondere durch eine hohe Stabilität in der Mutterlauge der Synthese aus, welche bei einer Temperatur im Bereich von 0°C bis 50°C, bevorzugt im Bereich von 15°C bis 30°C, mindestens 100 Minuten, bevorzugt mindestens einen Tag, insbesondere mindestens 5 Tage, beträgt. Weiterhin sind die getrockneten Calciumcarbonat-Teilchen extrem stabil und können auf vergleichsweise einfache Art und Weise isoliert und weiterverarbeitet werden. Diese Calciumcarbonat-Teilchen eignen sich insbesondere als Füllstoff für Polymere, da sie auf einfachste Art und Weise äußerst homogen im Polymer dispergiert werden können. Die resultierenden Polymer-Compounds zeichnen sich durch ein deutlich verbessertes Eigenschaftsspektrum aus und weisen insbesondere wesentlich verbesserte mechanische Eigenschaften auf, wie eine höhere Zugfestigkeit, ein höheres Zugmodul und eine höhere Reißdehnung sowie eine deutlich glattere Oberfläche. Der extrem geringe Restwassergehalt der Calciumcarbonat-Teilchen erlaubt dabei eine extreme einfache Verarbeitung der Calciumcarbonat-Teilchen. Darüber hinaus zeichnen sich die Calciumcarbonat-Teilchen durch eine vergleichsweise geringe Basizität aus. Ihr pH-Wert, zweckmäßigerweise gemessen nach EN ISO 787-9, ist vorzugsweise kleiner 11,5, bevorzugt kleiner 11,0, insbesondere kleiner 10,5. Dies ermöglicht eine vergleichsweise leichte Verarbeitung der Calciumcarbonat-Teilchen und erlaubt ihren Einsatz in allen denkbaren Bereichen, insbesondere auch in solchen Gebieten, die bisher aufgrund der zu hohen Basizität der herkömmlichen Calciumcarbonat-Teilchen nicht möglich waren.

Es werden außerdem kugelförmige, amorphe Calciumcarbonat-Teilchen, die einem Gehalt an Strukturwasser kleiner 0,4 mol, bevorzugt kleiner 0,3 mol, besonders bevorzugt kleiner 0,2 mol, ganz besonders bevorzugt kleiner 0,1 mol, pro mol Calciumcarbonat aufweisen, beschrieben. Diese Calciumcarbonat-Teilchen werden im Rahmen der vorliegenden Offenbarung gelegentlich als *"Calciumcarbonat-Teilchen mit geringem Strukturwassergehalt"* bezeichnet. In einer ganz besonders bevorzugten Ausführungsform umfassen diese Calciumcarbonat-Teilchen kein Strukturwasser.

Die vorliegende Erfindung betrifft mit einer Substanz stabilisierte kugelförmige, amorphe Calciumcarbonat-Teilchen, die zur Herstellung der *"Calciumcarbonat-Teilchen mit geringem Strukturwassergehalt"* besonders geeignet sind. Diese Calciumcarbonat-Teilchen werden im Rahmen der vorliegenden Erfindung gelegentlich als *"stabilisierte Calciumcarbonat-Teilchen"* bezeichnet.

Die folgenden Ausführungen zu den Calciumcarbonat-Teilchen gelten sowohl für die *"Calciumcarbonat-Teilchen mit geringem Strukturwassergehalt"* als auch für die *"stabilisierten Calciumcarbonat-Teilchen",* sofern nichts anderes angegeben wird.

Die vorliegende Erfindung betrifft kugelförmige Calciumcarbonat-Teilchen. Im Unterschied zu den anderen bekannten Formen des Standes der Technik sind die kugelförmigen Calciumcarbonat-Teilchen der vorliegenden Erfindung nicht z. B. aus Nadeln, Rhomboedern, Skalenoedern bzw. Somatoiden (gefälltes Calciumcarbonat; PCC) oder aus unregelmäßig geformten Teilchen (gemahlenes Calciumcarbonat; GCC), sondern aus kugelförmigen Teilchen aufgebaut, die vorzugsweise überwiegend einzelteilig vorliegen. Es werden jedoch kleinere Abweichungen von der perfekten Kugelform akzeptiert, solange die Eigenschaften der Teilchen, insbesondere ihre Dispergierbarkeit, nicht grundlegend verändert werden. So kann die Oberfläche der Teilchen gelegentliche Fehlstellen oder zusätzliche Ablagerungen aufweisen.

Bei den erfindungsgemäßen Calciumcarbonat-Kugeln handelt es sich vorzugsweise um massive Kugeln, die vorzugsweise nicht nur an der Oberfläche, sondern ganz aus amorphen Calciumcarbonat bestehen. Sie weisen zweckmäßigerweise eine möglichst homogene Struktur und Dichte auf.

Verglichen mit bereits bekannten Calciumcarbonat-Teilchen zeichnen sich die Calciumcarbonat-Teilchen der vorliegenden Erfindung insbesondere durch eine sehr gute Dispergierbarkeit aus. Sie eignen sich vor allem als Füllstoff für Polymere, da sie auf einfachste Art und Weise äußerst homogen im Polymer dispergiert werden können. Dabei erlaubt die vergleichsweise hohe Einzelteiligkeit der erfindungsgemäßen Calciumcarbonat-Teilchen und ihre vergleichsweise geringe Agglomeration eine äußerst gleichmäßige Verteilung der Calciumcarbonat-Teilchen innerhalb der Probe, insbesondere in einem Polymer.

Der mittlere Durchmesser der erfindungsgemäßen Calciumcarbonat-Teilchen ist 0,05 µm bis 2,0 µm. Dabei ist der mittlere Teilchendurchmesser vorzugsweise kleiner 1,75 µm, besonders bevorzugt kleiner 1,5 µm, insbesondere kleiner 1,2 µm. Weiterhin ist der mittlere Teilchendurchmesser günstigerweise größer 0,1 µm, vorzugsweise größer 0,2 µm, insbesondere größer 0,3 µm. Er wird zweckmäßigerweise durch Auswertung von Rasterelektronenmikroskop-Aufnahmen (REM-Aufnahmen) ermittelt, wobei vorzugsweise nur Teilchen mit einer Größe von mindestens 0,01 µm berücksichtigt werden und ein Zahlenmittel über vorzugsweise mindestens 20, besonders bevorzugt mindestens 40 Teilchen gebildet wird. Weiterhin haben sich auch Sedimentationsanalyseverfahren, insbesondere unter Verwendung eines Sedigraphs 5100 (Micromeritics GmbH), besonders bewährt.

Die Größenverteilung der Teilchen ist vergleichsweise eng und vorzugsweise derart, dass mindestens 90,0 Gew.-% aller Calciumcarbonat-Teilchen einen Teilchendurchmesser im Bereich von mittlerer Teilchendurchmesser -30 % bis mittlerer Teilchendurchmesser +30 % aufweisen.

Der Formfaktor der Calciumcarbonat-Teilchen, vorliegend definiert als der Quotient aus minimalem Teilchendurchmesser und maximalem Teilchendurchmesser, ist zweckmäßigerweise für mindestens 90 %, günstigerweise für mindestens 95 % aller Teilchen größer 0,90, besonders bevorzugt größer 0,95. In diesem Zusammenhang werden vorzugsweise nur Teilchen mit einer Teilchengröße im Bereich von 0,1 µm bis 2,0 µm berücksichtigt.

Die Calciumcarbonat-Teilchen, insbesondere die erfindungsgemäßen *"stabilisierten Calciumcarbonat-Teilchen",* zeichnen sich weiterhin durch einen vergleichsweise geringen Wassergehalt aus. Sie weisen, bezogen auf ihr Gesamtgewicht, einen Wassergehalt (Restfeuchte bei 200°C) von höchstens 5,0 Gew.-%, vorzugsweise von höchstens 2,5 Gew.-%, bevorzugt von höchstens 1,0 Gew.-%, besonders bevorzugt von höchstens 0,5 Gew.-%, noch mehr bevorzugt kleiner 0,4 Gew.-%, zweckmäßigerweise kleiner 0,3 Gew.-%, günstigerweise kleiner 0,2 Gew.-%, insbesondere von höchstens 0,1 Gew.-%, auf.

Im Rahmen der vorliegenden Erfindung wird der Wassergehalt der Calciumcarbonat-Teilchen vorzugsweise mittels Thermogravimetrie ermittelt, wobei die Messung vorzugsweise unter Stickstoff (Stickstoff-Durchflußmenge bevorzugt 20 ml/min) und zweckmäßigerweise über den Temperaturbereich von 40°C oder niedriger bis 250°C oder höher durchgeführt wird. Weiterhin erfolgt die Messung vorzugsweise bei einer Heizrate von 10°C/min.

Darüber hinaus weisen die *"stabilisierten Calciumcarbonat- Teilchen" einen* geringen Gehalt an Strukturwasser auf. Dieser ist vorzugsweise kleiner 5 mol, bevorzugt kleiner 3 mol, besonders bevorzugt kleiner 1 mol, insbesondere kleiner 0,5 mol Strukturwasser pro mol Calciumcarbonat. In einer ganz besonders bevorzugten Ausführungsform der vorliegenden Erfindung umfassen die Calciumcarbonat-Teilchen kein Strukturwasser.

Die erfindungsgemäßen Calciumcarbonat-Teilchen sind weiterhin durch eine vergleichsweise enge Teilchengrößenverteilung und eine sehr glatte Oberfläche gekennzeichnet.

Die spezifische Oberfläche BET der *"Calciumcarbonat-Teilchen mit geringem Strukturwassergehalt"* ist vorzugsweise höchstens 20 m²/g, bevorzugt höchstens 18 m²/g , zweckmäßigerweise höchstens 16 m²/g, besonders bevorzugt höchstens 14 m²/g, ganz besonders bevorzugt höchstens 12 m²/g, insbesondere höchstens 10 m²/g. Im Rahmen einer besonders bevorzugten Variante der vorliegenden Erfindung ist sie höchstens 8 m²/g, bevorzugt höchstens 7 m²/g, günstigerweise höchstens 6 m²/g, besonders bevorzugt höchstens 5 m²/g, insbesondere höchstens 4 m²/g. Andererseits ist sie vorzugsweise mindestens 1 m²/g, bevorzugt mindestens 2 m²/g, insbesondere mindestens 3 m²/g. Besonders vorteilhaft liegt sie im Bereich von 2 m²/g bis 20 m²/g, insbesondere im Bereich von 4 m²/g bis 12 m2/g.

Die spezifische Oberfläche der *"stabilisierte Calciumcarbonat-Teilchen"* ist höchstens 12 m²/g, insbesondere höchstens 10 m²/g. Im Rahmen einer besonders bevorzugten Variante der vorliegenden Erfindung ist sie höchstens 8 m²/g, bevorzugt höchstens 7 m²/g, günstigerweise höchstens 6 m²/g, besonders bevorzugt höchstens 5 m²/g, insbesondere höchstens 4 m²/g. Andererseits ist sie vorzugsweise mindestens 1 m²/g, bevorzugt mindestens 2 m²/g, insbesondere mindestens 3 m²/g. Besonders vorteilhaft liegt sie im Bereich von 2 m²/g bis 20 m²/g, insbesondere im Bereich von 4 m²/g bis 12 m²/g.

Besonders bemerkenswert ist in diesem Zusammenhang die Eigenschaft der erfindungsgemäßen Calciumcarbonat-Teilchen, dass ihre spezifische Oberfläche während einer Trocknung relativ konstant bleibt und sich vorzugsweise um maximal 200 %, bevorzugt um maximal 150 %, insbesondere um maximal 100 %, jeweils bezogen auf den Ausgangswert ändert.

Im Rahmen der vorliegenden Erfindung sind die Calciumcarbonat-Teilchen im Wesentlichen amorph. Der Begriff "amorph" bezeichnet an dieser Stelle solche Calciumcarbonat-Modifikationen, bei welchen die Atome zumindest teilweise keine geordneten Strukturen, sondern ein unregelmäßiges Muster ausbilden und daher nur über eine Nahordnung, nicht aber über eine Fernordnung verfügen. Hiervon zu unterscheiden sind kristalline Modifikationen des Calciumcarbonats, wie z. B. Calcit, Vaterit und Aragonit, bei welchen die Atome sowohl eine Nah- als auch eine Fernordnung aufweisen.

Vorliegend wird die Gegenwart von kristallinen Bestandteilen jedoch nicht kategorisch ausgeschlossen. Vorzugsweise ist der Anteil von kristallinem Calciumcarbonat jedoch kleiner 50 Gew.-%, besonders bevorzugt kleiner 30 Gew.-%, ganz besonders bevorzugt kleiner 15 Gew.-%, insbesondere kleiner 10 Gew.-%. Im Rahmen einer besonders bevorzugten Variante der vorliegenden Erfindung ist der Anteil von kristallinem Calciumcarbonat kleiner 8,0 Gew.-%, bevorzugt kleiner 6,0 Gew.-%, zweckmäßigerweise kleiner 4,0 Gew.-%, besonders bevorzugt kleiner 2,0 Gew.-%, ganz besonders bevorzugt kleiner 1,0 Gew.-%, insbesondere kleiner 0,5 Gew.-% , jeweils bezogen auf das Gesamtgewicht des Calciumcarbonats.

In den erfindungsgemäßen *"stabilisierten Calciumcarbonat-Teilchen"* ist der Anteil von kristallinem Calciumcarbonat zwingend kleiner 30 Gew.-%, bevorzugt kleiner 15 Gew.-%, insbesondere kleiner 10 Gew.-%, jeweils bezogen auf das Gesamtgewicht des Calciumcarbonats. Im Rahmen einer besonders bevorzugten Variante der vorliegenden Erfindung ist der Anteil von kristallinem Calciumcarbonat kleiner 8,0 Gew.-%, bevorzugt kleiner 6,0 Gew.-%, zweckmäßigerweise kleiner 4,0 Gew.-%, besonders bevorzugt kleiner 2,0 Gew.-%, ganz besonders bevorzugt kleiner 1,0 Gew.-%, insbesondere kleiner 0,5 Gew.-% , jeweils bezogen auf das Gesamtgewicht des Calciumcarbonats.

Für die Ermittlung der amorphen und der kristallinen Anteile hat sich die Röntgenbeugung mit einem internen Standard, vorzugsweise Quartz, in Verbindung mit einer Rietveld-Verfeinerung ganz besonders bewährt.

Im Rahmen der vorliegenden Erfindung werden die *"stabilisierten Calciumcarbonat-Teilchen"durch* mindestens eine vorzugsweise grenzflächenaktive Substanz stabilisiert, die vorzugsweise auf der Oberfläche der kugelförmigen Calciumcarbonat-Teilchen angeordnet ist. *"Grenzflächenaktive Substanzen"* bezeichnen im Sinne der vorliegenden Erfindung zweckmäßigerweise organische Verbindungen, die sich aus ihrer Lösung an Grenzflächen (Wasser/Calciumcarbonat-Teilchen) stark anreichern und dadurch die Oberflächenspannung, vorzugsweise gemessen bei 25°C, herabsetzen. Für weitere Details wird auf die Fachliteratur, insbesondere auf Römpp-Lexikon Chemie / Hrsg. Jürgen Falbe; Manfred Regitz. Bearb. Von Eckard Amelingmeier; Stuttgart, New York; Thieme; Band 2: Cm-G; 10. Auflage (1997); Stichwort: *"grenzflächenaktive Stoffe"*, verwiesen.

Erfindungsgemäß weist die vorzugsweise grenzflächenaktive Substanz eine Molmasse größer 100 g/mol, bevorzugt größer 125 g/mol, insbesondere größer 150 g/mol, auf und genügt der Formel R-Xₙ.

Der Rest R steht dabei für einen mindestens 1, vorzugsweise mindestens 2, bevorzugt mindest 4, besonders bevorzugt mindestens 6, insbesondere mindestens 8, Kohlenstoffatome umfassenden Rest, vorzugsweise für einen aliphatischen oder cycloaliphatischen Rest, der ggf. weitere Reste X umfassen kann und der ggf. eine oder mehrere Etherverknüpfungen aufweisen kann.

Der Rest X steht für eine Gruppe, die mindestens ein Sauerstoffatom sowie mindestens ein Kohlenstoffatom, Schwefelatom, Phosphoratom und/oder Stickstoffatom, bevorzugt mindestens ein Phosphoratom und/oder mindestens ein Kohlenstoffatom, umfasst. Besonders bevorzugt werden die folgenden Gruppen:
Carbonsäuregruppen -COOH,
Carboxylatgruppen ~COO⁻,
Sulfonsäuregruppen ~SO₃H,
Sulfonatgruppen ~SO₃⁻,
Hydrogensulfatgruppen ~OSO₃H,
Sulfatgruppen ~OSO₃⁻,
Phosphonsäuregruppen ~PO₃H₂,
Phosphonatgruppen ~PO₃H⁻, ~PO₃²⁻,
insbesondere Carbonsäuregruppen, Carboxylatgruppen, Phosphonsäuregruppen und Phosphonatgruppen.

Bevorzugte Gegenionen für die vorstehend genannten Anionen sind Metallkationen, insbesondere Alkalimetallkationen, bevorzugt Na⁺ und K⁺, sowie Ammoniumionen.

Bevorzugte Gegenionen für die vorstehend genannten Kationen sind Hydroxylionen, Hydrogencarbonationen, Carbonationen, Hydrogensulfationen, Sulfationen und Halogenidionen, insbesondere Chlorid- und Bromidionen.

n steht für eine vorzugsweise ganze Zahl im Bereich von 1 bis 20, bevorzugt im Bereich von 1 bis 10, insbesondere im Bereich von 1 bis 5.

Für die Zwecke der vorliegenden Erfindung besonders geeignete Substanzen umfassen Alkylcarbonsäuren, Alkylcarboxylate, Alkylsulfonsäuren, Alkylsulfonate, Alkylsulfate, Alkylethersulfate mit vorzugsweise 1 bis 4 Ethylenglykolethereinheiten, Fettalkoholethoxylate mit vorzugsweise 2 bis 20 Ethylenglykolethereinheiten, Alkylphenolethoxylate, ggf. substituierte Alkylphosphonsäuren, ggf. substituierte Alkylphosphonate, Sorbitanfettsäureester, Alkylpolyglucoside, N-Methylglucamide, Homo- und Copolymere der Acrylsäure sowie deren entsprechenden Salzformen und Blockcopolymere.

Eine erste Gruppe ganz besonders vorteilhafter Substanzen sind ggf. substituierte Alkylphosphonsäuren, insbesondere Amino-tri-(methylenphosphonsäure), 1-Hydroxyethylen-(1,1-diphosphonsäure), Ethylendiamin-tetra-(methylenphosphonsäure), Hexamethylendiamin-tetra-(methylenphosphonsäure), Diethylentriamin-penta-(methylenphosphonsäure), sowie ggf. substituierte Alkylphosphonate, insbesondere der vorstehend genannten Säuren. Diese Verbindungen sind als multifunktionelle Sequestriermittel für Metallionen und Steininhibitoren bekannt.

Weiterhin haben sich auch Homo- und Copolymere, bevorzugt Homopolymere, der Acrylsäure sowie deren entsprechenden Salzformen besonders bewährt, insbesondere solche, die ein Gewichtsmittel des Molekulargewichts im Bereich von 1.000 g/mol - 10.000 g/mol aufweisen.

Ferner ist die Verwendung von Blockcopolymeren, bevorzugt von doppel-hydrophilen Blockcopolymeren, insbesondere von Polyethylenoxid oder Polypropylenoxid, besonders günstig.

Der Anteil der vorzugsweise grenzflächenaktiven Substanzen kann prinzipiell frei gewählt und für die jeweilige Anwendung gezielt eingestellt werden. Er liegt jedoch vorzugsweise im Bereich von 0,1 Gew.-% bis 5,0 Gew.-%, insbesondere im Bereich von 0,3 Gew.-% bis 1,0 Gew.-%, bezogen auf den CaCO₃-Gehalt der kugelförmigen Calciumcarbonat-Teilchen.

Die Herstellung der kugelförmigen, amorphen Calciumcarbonat-Teilchen kann auf an sich bekannte Weise z. B. durch Hydrolyse von Dialkylcarbonat oder von Alkylencarbonat in einer Calcium-Kationen umfassenden Lösung erfolgen.

Die Herstellung von nicht-stabilisierten, kugelförmigen Calciumcarbonat-Teilchen wird beispielsweise in der Patentanmeldung WO 2008/122358 im Detail beschrieben, deren Offenbarung, insbesondere bzgl. besonders zweckmäßiger Varianten der Herstellung derartiger nicht-stabilisierter, kugelförmiger Calciumcarbonat-Teilchen, hiermit explizit durch Bezugnahme mit aufgenommen wird.

Die Hydrolyse des Dialkylcarbonats oder des Alkylencarbonats wird zweckmäßigerweise in Gegenwart eines Hydroxids durchgeführt.

Für die Zwecke der vorliegenden Erfindung bevorzugte Substanzen, die Ca²⁺-Ionen umfassen, sind Calciumhalogenide, bevorzugt CaCl₂, CaBr₂, insbesondere CaCl₂, sowie Calciumhydroxid. Im Rahmen einer ersten besonders bevorzugten Ausführungsform der vorliegenden Erfindung wird CaCl₂ eingesetzt. Im einer weiteren besonders bevorzugten Ausführungsform der vorliegenden Erfindung wird Ca(OH)₂ verwendet.

Im Rahmen einer ersten besonders bevorzugten Ausführungsform der vorliegenden Erfindung wird ein Dialkylcarbonat eingesetzt. Besonders geeignete Dialkylcarbonate umfassen 3 bis 20, bevorzugt 3 bis 9, Kohlenstoffatome, insbesondere Dimethylcarbonat, Diethylcarbonat, Di-n-propylcarbonat, Di-isopropylcarbonat, Di-n-butylcarbonat, Di-sec-butylcarbonat und Di-tert.-butylcarbonat, wobei Dimethylcarbonat in diesem Zusammenhang ganz besonders bevorzugt wird.

In einer weiteren besonders bevorzugten Ausführungsform der vorliegenden Erfindung wird ein Alkylencarbonat zur Reaktion gebracht. Besonders zweckmäßige Alkylencarbonate umfassen 3 bis 20, bevorzugt 3 bis 9, besonders bevorzugt 3 bis 6, Kohlenstoffatome und schließen insbesondere solche Verbindungen ein, die einen Ring aus 3 bis 8, bevorzugt 4 bis 6, insbesondere 5, Atomen, mit vorzugsweise 2 Sauerstoffatomen und ansonsten Kohlenstoffatomen, umfassen. Propylencarbonat (4-Methyl-1,3-dioxolan) hat sich in diesem Zusammenhang ganz besonders bewährt.

Als Hydroxid haben sich Alkalimetallhydroxide, insbesondere NaOH, und Calciumhydroxid, als besonders geeignet erwiesen. Im Rahmen einer ersten besonders bevorzugten Ausführungsform der vorliegenden Erfindung wird NaOH eingesetzt. Im einer weiteren besonders bevorzugten Ausführungsform der vorliegenden Erfindung wird Ca(OH)₂ verwendet.

Weiterhin ist das molare Verhältnis von Ca²⁺, bevorzugt von Calciumchlorid, zu OH⁻, bevorzugt Alkalimetallhydroxid, in der Reaktionsmischung vorzugsweise größer 0,5 : 1 und besonders bevorzugt im Bereich von >0,5 : 1 bis 1 : 1, insbesondere im Bereich von 0,6 : 1 bis 0,9 : 1.

Das molare Verhältnis von Ca²⁺, bevorzugt von Calciumchlorid, zu Dialkylcarbonat und/oder Alkylencarbonat in der Reaktionsmischung liegt günstigerweise im Bereich von 0,9 : 1,5 bis 1,1 : 1, besonders bevorzugt im Bereich von 0,95 : 1 bis 1 : 0,95. Im Rahmen einer ganz besonders zweckmäßigen Variante der vorliegenden Erfindung werden das Dialkylcarbonat und/oder das Alkylencarbonat und das Ca²⁺, insbesondere das Calciumchlorid, äquimolar eingesetzt.

Im Rahmen einer ersten ganz besonders bevorzugten Variante der vorliegenden Erfindung wird nicht Ca(OH)₂ als OH⁻-Quelle verwendet. Die Komponenten für die Umsetzung setzt man dabei günstigerweise in folgenden Konzentrationen ein:

| | |
|---|---|
| a) Ca²⁺: | >10 mmol/l bis 50 mmol/l, bevorzugt 15 mmol/l bis 45 mmol/l, insbesondere 17 mmol/l bis 35 mmol/l; |
| b) Dialkylcarbonat und/oder Alkylencarbonat: | >10 mmol/l bis 50 mmol/l, bevorzugt 15 mmol/l bis 45 mmol/l, insbesondere 17 mmol/l bis 35 mmol/l; |
| c) OH⁻: | 20 mmol/l bis 100 mmol/l, bevorzugt 20 mmol/l bis 50 mmol/l, besonders bevorzugt 25 mmol/l bis 45 mmol/l, insbesondere 28 mmol/l bis 35 mmol/l. |

Die jeweiligen Konzentrationsangaben beziehen sich dabei auf die Konzentrationen der genannten Komponenten in der Reaktionsmischung.

Im Rahmen einer weiteren ganz besonders bevorzugten Variante der vorliegenden Erfindung wird Ca(OH)₂, bevorzugt Kalkmilch, insbesondere gesättigte Kalkmilch, als OH⁻-Quelle verwendet. Die Komponenten für die Umsetzung setzt man dabei günstigerweise in folgenden Konzentrationen ein:

| | |
|---|---|
| a) Ca(OH)₂: | >5 mmol/l bis 25 mmol/l, bevorzugt 7,5 mmol/l bis 22,5 mmol/l, insbesondere 8,5 mmol/l bis 15,5 mmol/l; |
| b) Dialkylcarbonat und/oder Alkylencarbonat: | >5 mmol/l bis 25 mmol/l, bevorzugt 7,5 mmol/l bis 22,5 mmol/l, insbesondere 8,5 mmol/l bis 15,5 mmol/l. |

Die jeweiligen Konzentrationsangaben beziehen sich dabei auf die Konzentrationen der genannten Komponenten in der Reaktionsmischung.

Die Reaktion der Komponenten wird vorzugsweise bei einer Temperatur im Bereich von 15°C bis 30°C durchgeführt.

Die konkrete Größe der Calciumcarbonat-Teilchen kann auf an sich bekannte Weise über die Übersättigung gesteuert werden.

Die Calciumcarbonat-Teilchen fallen unter den oben genannten Bedingungen aus der Reaktionsmischung aus.

Die Stabilisierung der amorphen Calciumcarbonat-Teilchen erfolgt zweckmäßigerweise durch Zugabe der vorzugsweise grenzflächenaktiven Substanz zu der Reaktionsmischung.

Diese Zugabe der Substanz sollte dabei erst nach Beginn der Reaktion zur Bildung der Calciumcarbonat-Teilchen, d. h. erst nach Zugabe der Edukte, vorzugsweise frühestens 1 Minute, bevorzugt frühestens 2 Minuten, zweckmäßigerweise frühestens 3 Minuten, besonders bevorzugt frühestens 4 Minute, insbesondere frühestens 5 Minuten, nach Mischen der Edukte erfolgen. Weiterhin sollte der Zeitpunkt der Zugabe so gewählt werden, dass die vorzugsweise grenzflächenaktive Substanz kurz vor dem Ende der Fällung und möglichst kurz vor dem Beginn der Umwandlung des amorphen Calciumcarbonats in kristalline Modifikationen zuzugeben wird, da sich auf diese Weise die Ausbeute und die Reinheit der *"stabilisierten*, *kugelförmigen*, *amorphen Calciumcarbonat-*Teilchen" maximieren lässt. Erfolgt die Zugabe der vorzugsweise grenzflächenaktiven Substanz früher, so wird in der Regel ein bimodales Produkt erhalten, dass neben den gewünschten, stabilisierten, kugelförmigen, amorphen Calciumcarbonat-Teilchen ultrafeine, amorphe Calciumcarbonat-Teilchen als Nebenprodukt umfasst. Erfolgt die Zugabe der vorzugsweise grenzflächenaktiven Substanz später, so setzt bereits die Umwandlung der gewünschten *"stabilisierten Calciumcarbonat-Teilchen"* in kristalline Modifikationen ein.

Aus diesem Grund wird die vorzugsweise grenzflächenaktive Substanz bei einem pH-Wert der Reaktiohsmischung im Bereich von 11,5 bis 10,0, bevorzugt im Bereich von 11,3 bis 10,5, insbesondere im Bereich von 11,0 bis 10,8, jeweils gemessen bei der Reaktionstemperatur, vorzugsweise 25 °C, zugegeben.

Die resultierenden *"stabilisierten Calciumcarbonat-Teilchen"* können auf an sich bekannte Weise, z. B. durch Zentrifugation, entwässert und getrocknet werden. Ein Waschen mit Aceton und/oder eine Trocknung im Vakuumtrockenschrank ist nicht mehr unbedingt erforderlich.

Die "*Calciumcarbonat-Teilchen mit geringem Strukturwassergehalt"* sind aus den erfindungsgemäßen *"stabilisierten Calciumcarbonat- Teilchen" durch* Trocknung erhältlich.

Dazu werden die erhaltenen Calciumcarbonat-Teilchen derart getrocknet, dass sie den gewünschten Restwassergehalt aufweisen. Hierfür hat sich eine Vorgehensweise besonders bewährt, bei welcher man die Calciumcarbonat-Teilchen vorzugsweise zunächst bei einer Temperatur bis zu 150°C vortrocknet und anschließend die Calciumcarbonat-Teilchen vorzugsweise bei einer Temperatur im Bereich von größer 150°C bis 250°C, bevorzugt im Bereich von 170°C bis 230°C, besonders bevorzugt im Bereich von 180°C bis 220°C, insbesondere im Bereich von 190°C bis 210°C, trocknet. Die Trocknung erfolgt vorzugsweise im Umlufttrockenschrank. Dabei werden die Calciumcarbonat-Teilchen zweckmäßigerweise mindestens 3 h, besonders bevorzugt mindestens 6 h, insbesondere mindestens 20 h getrocknet.

Nach dem Trocknen werden die getrockneten Produkte zweckmäßigerweise zerkleinert, vorzugsweise gemahlen, besonders bevorzugt feinstgemahlen, insbesondere kolloidgemahlen, um die einzelnen Partikel bestmöglich von einander zu lösen. Dies kann auf an sich bekannte Weise, beispielsweise mittels einer Mühle, insbesondere mittels einer Stiftmühle, erfolgen, die vorzugsweise zu einer Endfeinheit des Mahlguts kleiner 1000 µm, bevorzugt kleiner 10 µm, insbesondere kleiner 5 µm, führt. Für weitere Details bzgl. des Zerkleinern von Produkten wird auf die gängige Fachliteratur, insbesondere auf Römpp-Lexikon Chemie, Hrsg. Jürgen Falbe, Manfred Regitz Stuutgart, New York, Thieme 10. Auflage, Band: M-Pk, Stichwörter "Mahlen" und "*Mühlen"* sowie Band T-Z, Stichwort *"Zerkleinern"* und die an diesen Stellen angegebenen Fundstellen verwiesen.

Die erfindungsgemäßen Calciumcarbonat-Teilchen sowie die *"Calciumcarbonat-Teilchen mit geringem Strukturwassergehalt",* eignen sich prinzipiell für alle Anwendungen, die für Calciumcarbonat vorgezeichnet sind. Hierzu gehören insbesondere die Verwendung als Additiv oder Modifizierungsmittel in Papier, Farben, Kunststoffen, Tinten, Klebstoffen und Pharmazeutika, insbesondere als Füllstoff von vorzugsweise organischen Polymeren.

Besonders zweckmäßige Polymer-Compounds enthalten, jeweils bezogen auf ihr Gesamtvolumen, 99,9 Vol.-% bis 50,0 Vol.-%, besonders bevorzugt 95,0 Vol.-% bis 50,0 Vol.-% mindestens eines Polymers und 0,1 Vol.-% bis 50,0 Vol.-%, besonders bevorzugt 5,0 Vol.-% bis 50 Vol.-% kugelförmige, amorphe Calciumcarbonat-Teilchen, insbesondere *"Calciumcarbonat-Teilchen mit geringem Strukturwassergehalt".* Thermoplastisch verarbeitbare Polymere, bevorzugt bei Temperaturen im Bereich von 100°C bis 350°C, insbesondere im Bereich von 100°C bis 250°C, thermoplastisch verarbeitbare Polymere, insbesondere Polyethylen, wie LLDPE, HDPE, Polypropylen (PP), Polystyrol (PS) und Polymilchsäure (PLA) sowie andere resorbierbare Polymere, insbesondere bioresorbierbare Polymere, werden in diesem Zusammenhang besonders bevorzugt.

Ganz besonders vorteilhaft ist die Verwendung der amorphen Calciumcarbonat-Teilchen, insbesondere der erfindungsgemäßen *"Calciumcarbonat-Teilchen mit geringem Strukturwassergehalt",* als Komponente für die Herstellung von Polymer-Compounds, bevorzugt von resorbierbaren Polymer-Compounds, insbesondere von bioresorbierbaren Polymer-Compounds.

Die Einarbeitung des Füllstoffs in das Polymer kann auf an sich bekannte Weise, z. B. durch thermoplastische Verarbeitung, erfolgen. Besonders bevorzugte Verfahren zur Herstellung der erfindungsgemäßen Polymer-Compounds umfassen Kneten, Walzen, Kalandrieren, Extrudieren und/oder Spritzgießen von Zusammensetzungen, die vorzugsweise das Polymer und die erfindungsgemäßen Calciumcarbonat-Teilchen umfassen. Extrusionsverfahren haben sich in diesem Zusammenhang ganz besonders bewährt.

Im Folgenden wird die Lehre der vorliegenden Erfindung durch Beispiele und Vergleichsbeispiele weiter veranschaulicht.

### Charakterisierung

Die Eigenschaften der Calciumcarbonat-Teilchen wurden wie folgt bestimmt.

### Elektronenmikroskop

Die rasterelektronischen Aufnahmen wurden mit einem Hochspannungselektronenmikroskop (Zeiss, DSM 962) bei 15 kV durchgeführt. Die Proben wurden mit einer Gold-Palladiumschicht besprüht.

### Röntgenstreuung

Die Kristallform der Calciumcarbonat-Teilchen wurde durch Röntgenstreuung (Cu Kα- Strahlung; Philips CubiX XRD) ermittelt.

Für die Ermittlung der amorphen und der kristallinen Anteile wurde die Röntgenbeugung mit einem internen Standard (Aluminiumoxid, -100 mesh) in Verbindung mit der Rietveld-Verfeinerung verwendet.

### Thermogravimetrie (TGA)

Die Thermogravimetrie wurde mit einem PerkinElmer STA 6000 unter Stickstoff (Stickstoff-Durchflußmenge: 20 ml/min) im Bereich von 40°C bis 1000°C bei einer Heizrate von 10°C/min durchgeführt.

### Spezifische Oberfläche (BET)

Die spezifische Oberfläche der Teilchen wurde durch das BET-Verfahren (Micromeritics Gemini 2360 Analyser) über die Stickstoff-Adsorption durchgeführt. Die Proben wurden für die Adsorptionsuntersuchungen über Nach bei der Raumtemperatur entgast (FlowPrep 060 Degasser).

### pH-Wert von Pulver-Proben

pH-Wert von Pulver-Proben wurde nach EN ISO 787-9 bestimmt. Bei dem DACC wurden 1,5 g Pulver in 13,5 g CO₂-freies E-Wasser zugegeben.

### Vergleichsbeispiel 1

### Alkalisches ACC (nach Doktorarbeit Faatz)

In einem 5 l-Kunststoffkanister wurden 5 l E-Wasser vorgelegt und 14,702 g (0,02 mol/l bezogen auf Lösung A) Calciumchlorid-Dihydrat sowie 45,000 g (0,1 mol/l bezogen auf Lösung A) Dimethylcarbonat bei 23,5°C gelöst (Lösung A). Eine Lösung von 39,978 g (0,2 mol/l bezogen auf Lösung B) Natriumhydroxid in 5 l E-Wasser wurde in einem 5 l-Kunststoffkanister bei 23,5°C separat hergestellt (Lösung B).

1000 ml gut homogenisierte Lösung A wurden in einer 2000 ml PE-Weithalsflasche vorgelegt. Danach wurden 1000 ml Lösung B rasch in die Lösung A zugegeben, die Stoppuhr gestartet und die Reaktionsmischung 20-mal (ca. 10 s lang) geschüttelt.

Die Trübung der Reaktionslösung erfolgte nach 1 min.

Nach 3,5 min wurde der gebildete Niederschlag von der Mutterlauge durch Filtration abgetrennt, mit Aceton gründlich gewaschen und der Niederschlag im Vakuum getrocknet.

Die spezifische Oberfläche der Teilchen betrug 4,4 m²/g und der pH-Wert des Pulvers lag bei 12,4.

Es konnten 1,43 g Reaktionsprodukt gewonnen werden.

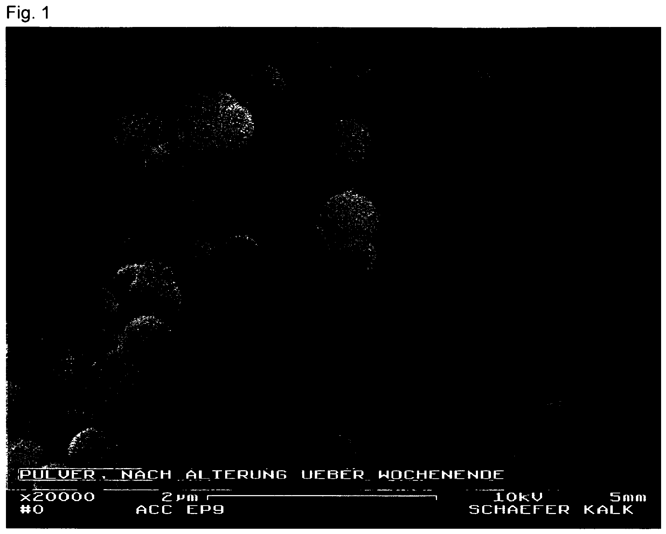

Eine elektronenmikroskopische Aufnahme des Produkts nach 6 Tagen Lagerung bei 23°C und einer relativen Luftfeuchtigkeit von 65 % wird in Fig. 1 gezeigt.

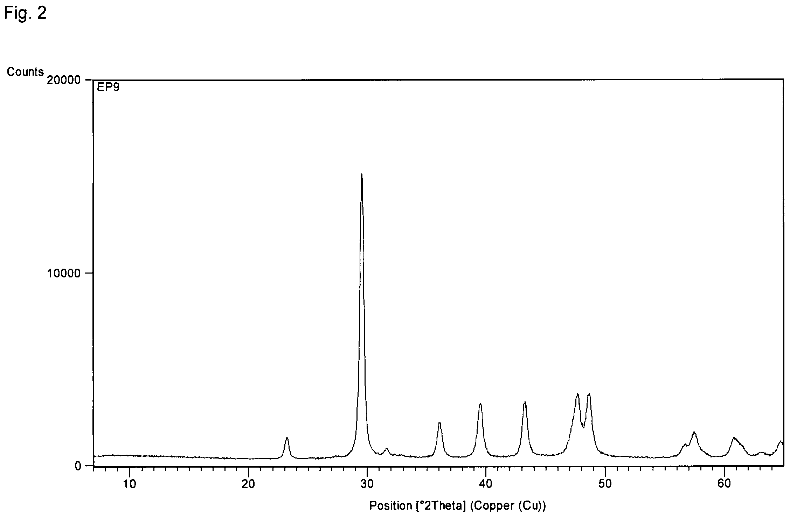

Fig. 2 zeigt das Röntgenbeugungsspektrum dieses Produktes. Die Calciumcarbonat-Teilchen umfassten im Wesentlichen kristalline Anteile.

Bei Alterung der Calciumcarbonat-Teilchen in der Mutterlauge waren bereits nach 100 Minuten überwiegend kristalline Bestandteile zu beobachten.

### Vergleichsbeispiel 2

### ACC (nach Doktorarbeit Faatz)

In einem 5 l-Kunststoffkanister wurden 5 l E-Wasser vorgelegt und 14,702 g (0,02 mol/l bezogen auf Lösung A) Calciumchlorid-Dihydrat sowie 9,000 g (0,02 mol/l bezogen auf Lösung A) Dimethylcarbonat bei 23,5°C gelöst (Lösung A). Eine Lösung von 7,996 g (0,04 mol/l bezogen auf Lösung B) Natriumhydroxid in 5 l E-Wasser wurde in einem 5 l-Kunststoffkanister bei 23,5°C separat hergestellt (Lösung B).

1000 ml gut homogenisierte Lösung A wurden in einer 2000 ml PE-Weithalsflasche vorgelegt. Danach wurden 1000 ml Lösung B rasch in die Lösung A zugegeben, die Stoppuhr gestartet und die Reaktionsmischung 20-mal (ca. 10 s lang) geschüttelt.

Die Trübung der Reaktionslösung erfolgte nach 7 min.

Nach 10 min wurde der gebildete Niederschlag von der Mutterlauge durch Filtration abgetrennt, mit Aceton gründlich gewaschen und der Niederschlag im Vakuum getrocknet.

Die spezifische Oberfläche der Teilchen betrug 6,2 m²/g.

Es konnten 0,35 g Reaktionsprodukt gewonnen werden.

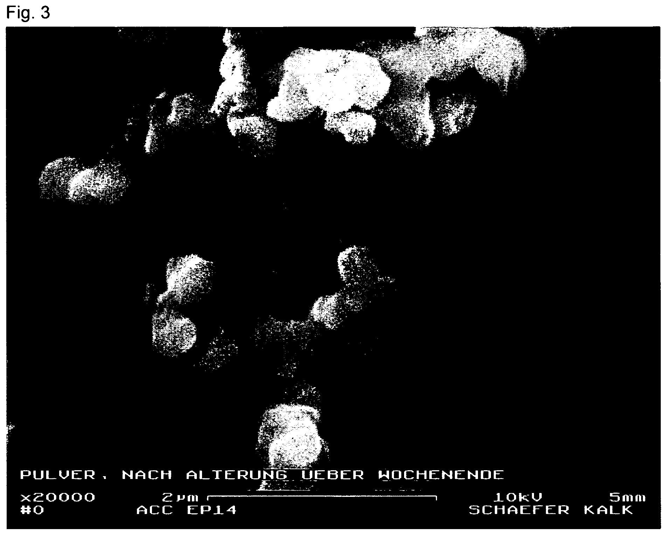

Eine elektronenmikroskopische Aufnahme des Produkts nach 6 Tagen Lagerung bei 23°C und einer relativen Luftfeuchtigkeit von 65 % wird in Fig. 3 gezeigt.

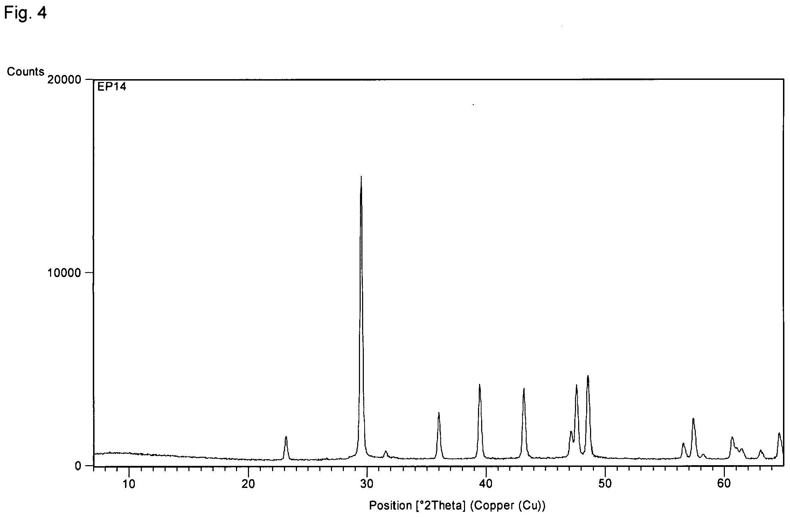

Fig. 4 zeigt das Röntgenbeugungsspektrum dieses Produktes. Die Calciumcarbonat-Teilchen umfassten im Wesentlichen kristalline Anteile.

Bei Alterung der Calciumcarbonat-Teilchen in der Mutterlauge waren bereits nach 100 Minuten überwiegend kristalline Bestandteile zu beobachten.

### Vergleichsbeispiel 3

### Getrocknetes ACC (nach WO 2008/122358: Beispiel B2 (Tabelle 1) und V16 (Tabelle 2))

In einem 5 l-Kunststoffkanister wurden 5 l E-Wasser vorgelegt und 29,404 g (0,04 mol/l bezogen auf Lösung A) Calciumchlorid-Dihydrat sowie 18,016 g (0,04 mol/l bezogen auf Lösung A) Dimethylcarbonat bei 23,5°C gelöst (Lösung A). Eine Lösung von 12,000 g (0,06 mol/l bezogen auf Lösung B) Natriumhydroxid in 5 l E-Wasser wurde in einem 5 l-Kunststoffkanister bei 23,5°C separat hergestellt (Lösung B).

1000 ml gut homogenisierte Lösung A wurden in einer 2000 ml PE-Weithalsflasche vorgelegt. Danach wurden 1000 ml Lösung B rasch in die Lösung A zugegeben, die Stoppuhr gestartet und die Reaktionsmischung 20-mal (ca. 10 s lang) geschüttelt.

Die Trübung der Reaktionslösung erfolgte nach ca. 4 min.

Nach 10 min wurde der gebildete Niederschlag von der Mutterlauge durch Filtration abgetrennt, mit Aceton gründlich gewaschen und der Niederschlag im Vakuum zuerst bei der Raumtemperatur (V1) und danach im Vakuum bei 200°C für 6 h (V16) getrocknet. Der Wassergehalt nach dieser Trocknung bei 200°C war nach TGA (Temperaturbereich von 40 - 250°C) ungefähr 0,4 Gew.-%.

Die spezifische Oberfläche der Teilchen V1 betrug 3,4 m²/g. Die spezifische Oberfläche der Teilchen V16 betrug 6,0 m²/g und der pH-Wert lag bei 11,9.

Nach der Trocknung im Vakuum bei Raumtemperatur (V1) konnten 1,43 g Reaktionsprodukt gewonnen werden.

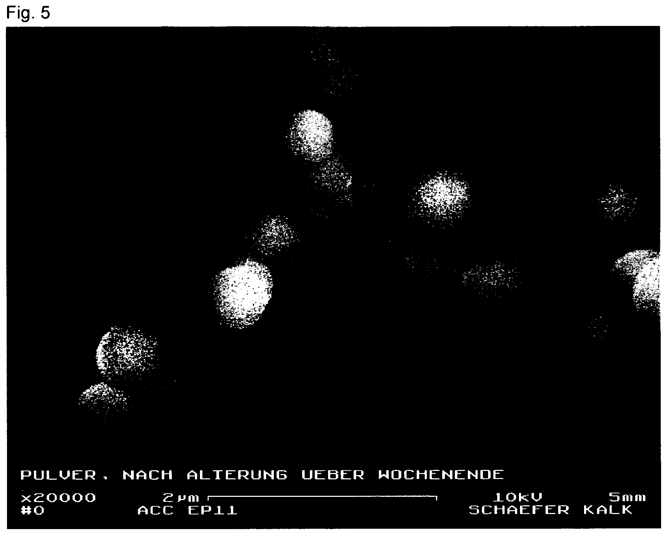

Eine elektronenmikroskopische Aufnahme des Produkts nach 6 Tagen Lagerung bei 23°C und einer relativen Luftfeuchtigkeit von 65 % wird in Fig. 5 gezeigt.

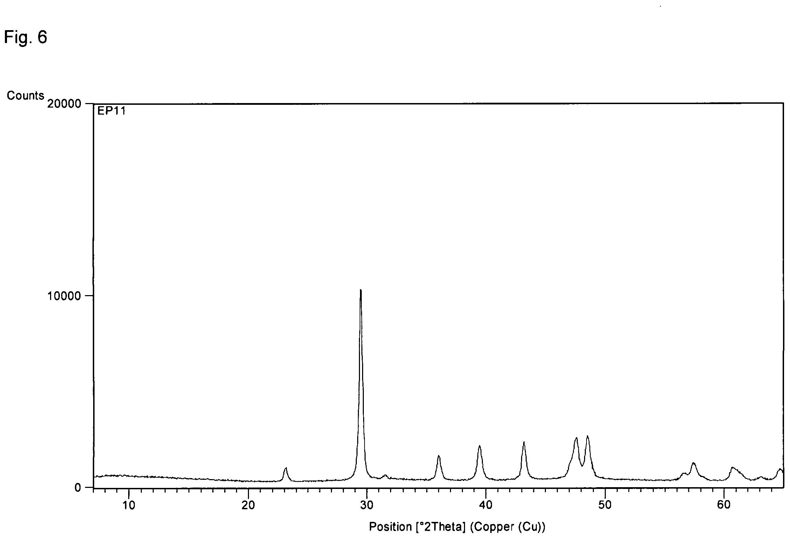

Fig. 6 zeigt das Röntgenbeugungsspektrum dieses Produktes. Die Calciumcarbonat-Teilchen umfassten im Wesentlichen kristalline Anteile.

Bei Alterung der Calciumcarbonat-Teilchen in der Mutterlauge waren bereits nach 100 Minuten überwiegend kristalline Bestandteile zu beobachten.

### Beispiel 1

### Getrocknetes, stabilisiertes ACC

In einem 10 l-Kunststoffkanister wurden 5 l E-Wasser vorgelegt und 29,404 g (0,04 mol/l bezogen auf Lösung A) Calciumchlorid-Dihydrat sowie 20,418 g (0,04 mol/l bezogen auf Lösung A) Propylencarbonat bei 23,5°C gelöst (Lösung A). Eine Lösung von 16,000 g (0,08 mol/l bezogen auf Lösung B) Natriumhydroxid in 5 l E-Wasser wurde in einem 5 l-Kunststoffkanister bei 23,5°C separat hergestellt (Lösung B).

Die Lösung B wurde rasch in die Lösung A zugegeben, die Stoppuhr gestartet und die Reaktionsmischung 20-mal (ca. 10 s lang) geschüttelt. Die Reaktion wurde beim pH-Wert von 11,0 nach genau 14,75 min durch die Zugabe von 1,7 g Ethylendiamin-tetra-(methylenphosphonsäure) (Pentanatriumsalz; 31 %ige Lösung) unter intensivem Rühren für 1 min abgebrochen.

Der gebildete Niederschlag wurde von der Mutterlauge durch Filtration abgetrennt, mit E-Wasser gewaschen und im Umluft-Trockenschrank zuerst bei 130°C für 45 min (BET: 4,4 m²/g; Produkt mit Strukturwasser) und danach bei 200°C über Nacht getrocknet. Der Wassergehalt nach dieser Trocknung bei 200°C war nach TGA (Temperaturbereich von 40 - 250°C) ungefähr 0,1 Gew.-% (sogenanntes "Produkt ohne Strukturwasser").

Die spezifische Oberfläche der bei 200°C getrocknetenTeilchen betrug 3,9 m²/g und der pH-Wert des Pulvers lag bei 10,3.

Nach der Trocknung bei 130°C konnten etwa 15,3 g Reaktionsprodukt gewonnen werden (Produkt mit Strukturwasser).

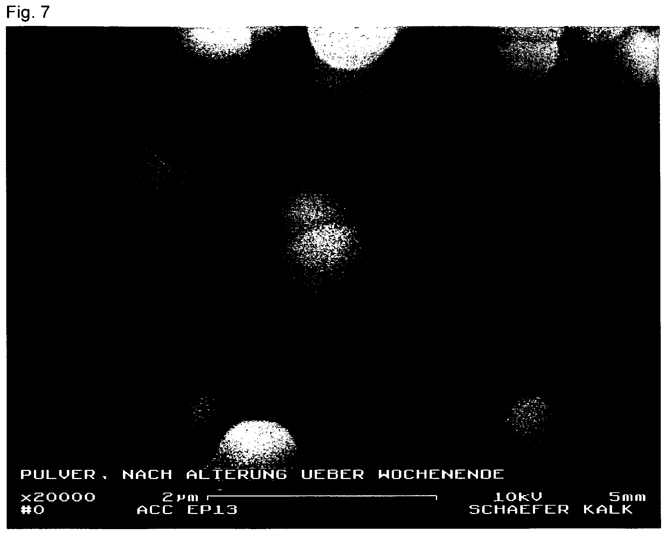

Eine elektronenmikroskopische Aufnahme des Produkts nach 6 Tagen Lagerung bei 23°C und einer relativen Luftfeuchtigkeit von 65 % wird in Fig. 7 gezeigt (Produkt mit Strukturwasser).

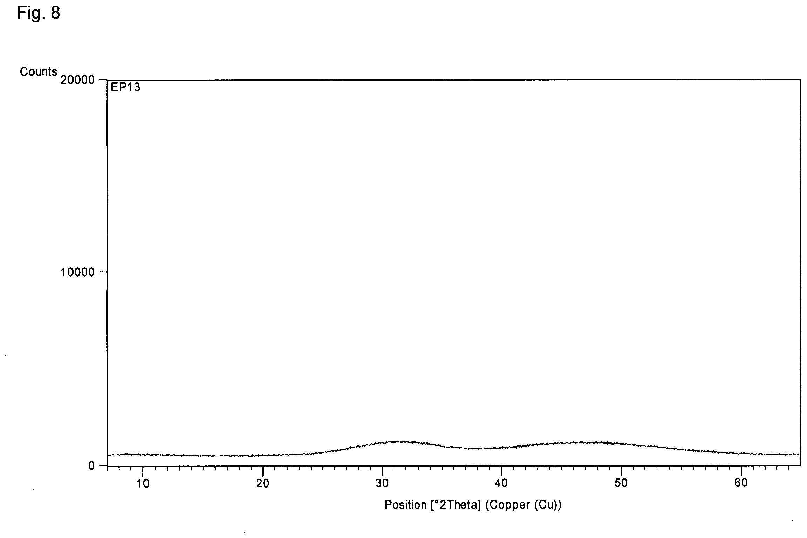

Fig. 8 zeigt das Röntgenbeugungsspektrum des bei 200°C getrockneten Produktes ("Produkt ohne Strukturwasser"). Die Calciumcarbonat-Teilchen umfassten ausschließlich amorphe Anteile.

Bei Alterung der Calciumcarbonat-Teilchen in der Mutterlauge waren selbst nach 5 Tagen keine kristalline Bestandteile zu beobachten.

### Beispiel 2

### Getrocknetes, stabilisiertes ACC

Die Versuchsdurchführung erfolgte wie in Beispiel 1, wobei das Stabilisierungsagenz (Ethylendiamin-tetra-(methylenphosphonsäure) (Pentanatriumsalz)) allerdings früher zugegeben wurde (Zugabe nach 5,5 min; pH-Wert der Reaktionsmischung zum Zugabezeitpunkt: 11,78).

Nach der Trocknung bei 130°C konnten etwa 15,5 g Reaktionsprodukt gewonnen werden (Produkt mit Strukturwasser), welches eine BET-Oberfläche von 14,6 m²/g aufwies.

### Beispiel 3

### Getrocknetes, stabilisiertes ACC

Die Versuchsdurchführung erfolgte wie in Beispiel 1, wobei das Stabilisierungsagenz (Ethylendiamin-tetra-(methylenphosphonsäure) (Pentanatriumsalz)) allerdings später zugegeben wurde (Zugabe nach 30 min; pH-Wert der Reaktionsmischung zum Zugabezeitpunkt: 9,63).

Nach der Trocknung bei 130°C konnten etwa 15,3 g Reaktionsprodukt gewonnen werden (Produkt mit Strukturwasser), welches eine BET-Oberfläche von 4,4 m²/g aufwies und einen geringen Anteil kristalliner Bestandteile umfasste.

## Patentansprüche

1. Stabilisierte, kugelförmige, amorphe Calciumcarbonat-Teilchen mit einem mittleren Teilchendurchmesser im Bereich von 0,05 µm bis 2,0 µm und einem Wassergehalt von höchstens 5,0 Gew.-%, bezogen auf ihr Gesamtgewicht und gemessen als Restfeuchte bei 200°C, **dadurch gekennzeichnet, dass**
a) die Calciumcarbonat-Teilchen mindestens eine Substanz umfassen, die eine Molmasse größer 100 g/mol aufweist und der Formel R-Xₙ genügt, wobei der Rest R für einen mindestens ein Kohlenstoffatom umfassenden Rest steht, der Rest X für eine Gruppe steht, die mindestens ein Sauerstoffatom sowie mindestens ein Kohlenstoffatom, Schwefelatom, Phosphoratom und/oder Stickstoffatom umfasst und n eine vorzugsweise ganze Zahl im Bereich von 1 bis 20 darstellt,
b) der Anteil von kristallinem Calciumcarbonat kleiner 30 Gew.-%, bezogen auf das Gesamtgewicht des Calciumcarbonats, ist,
c) die spezifische Oberfläche der Calciumcarbonat-Teilchen höchstens 12 m²/g ist
wobei die Restfeuchte, der Anteil von kristallinem Calciumcarbonat und die spezifische Oberfläche der Calciumcarbonat-Teilchen, wie in der Beschreibung dargelegt, ermittelt werden.

2. Calciumcarbonat-Teilchen nach Anspruch 1, **dadurch gekennzeichnet, dass** der Rest R für einen aliphatischen oder cycloaliphatischen Rest steht, der ggf. weitere Reste X umfassen kann und der ggf. eine oder mehrere Etherverknüpfungen aufweisen kann.

3. Calciumcarbonat-Teilchen nach Anspruch 1 oder 2, **dadurch gekennzeichnet, dass** der Rest X für eine
Carbonsäuregruppe -COOH,
Carboxylatgruppe ~COO⁻,
Sulfonsäuregruppe ∼SO₃H,
Sulfonatgruppe ~SO₃⁻,
Hydrogensulfatgruppe -OSOsH,
Sulfatgruppe -OSO₃⁻,
Phosphonsäuregruppe ∼PO₃H₂,
Phosphonatgruppe ∼PO₃H⁻ oder ~PO₃²⁻
steht.

4. Calciumcarbonat-Teilchen nach Anspruch 3, **dadurch gekennzeichnet, dass** der Rest X für eine Carbonsäuregruppe, Carboxylatgruppe, Phosphonsäuregruppe oder eine Phosphonatgruppe steht.

5. Calciumcarbonat-Teilchen nach mindestens einem der vorangehenden Ansprüche, **dadurch gekennzeichnet, dass** die Substanz ausgewählt ist unter Alkylcarbonsäuren, Alkylcarboxylaten, Alkylsulfonsäuren, Alkylsulfonaten, Alkylsulfaten, Alkylethersulfaten, Fettalkoholethoxylaten, Alkylphenolethoxylaten, ggf. substituierten Alkylphosphonsäuren, ggf. substituierten Alkylphosphonaten, Sorbitanfettsäureestern, Alkylpolyglucosiden, N-Methylglucamiden, Homo- und Copolymeren der Acrylsäure sowie deren entsprechenden Salzformen und Blockcopolymeren.

6. Calciumcarbonat-Teilchen nach Anspruch 5, **dadurch gekennzeichnet, dass** die Substanz ausgewählt ist unter Amino-tri-(methylenphosphonsäure), 1-Hydroxyethylen-(1,1-diphosphonsäure), Ethylendiamin-tetra-(methylenphosphonsäure), Hexamethylendiamin-tetra-(methylenphosphonsäure), Diethylentriamin-penta-(methylenphosphonsäure) oder Alkylphosphonaten der vorstehend genannten Säuren.

7. Calciumcarbonat-Teilchen nach Anspruch 5, **dadurch gekennzeichnet, dass** die Substanz ausgewählt ist unter Homopolymeren der Acrylsäure sowie deren entsprechenden Salzformen, die ein Gewichtsmittel des Molekulargewichts im Bereich von 1.000 g/mol - 10.000 g/mol aufweisen.

8. Calciumcarbonat-Teilchen nach Anspruch 5, **dadurch gekennzeichnet, dass** die Substanz ausgewählt ist unter Polyethylenoxid oder Polypropylenoxid.

9. Calciumcarbonat-Teilchen nach mindestens einem der vorangehenden Ansprüche, **dadurch gekennzeichnet, dass** die Substanz in einer Menge im Bereich von 0,1 Gew.-% bis 5,0 Gew.-%, bezogen auf den CaCO₃-Gehalt der kugelförmigen Calciumcarbonat-Teilchen, vorliegt.

10. Verfahren zur Herstellung von Calciumcarbonat-Teilchen nach mindestens einem der vorangehenden Ansprüche, bei welchem man Ca²⁺-Ionen mit Dialkylcarbonat und/oder Alkylencarbonat in Gegenwart von OH⁻-Ionen in wässriger Lösung umsetzt, wobei man nicht Ca(OH)₂ als OH⁻-Quelle verwendet und die Komponenten in folgenden Konzentrationen einsetzt:
| | |
|---|---|
| a) Ca²⁺: | >10 mmol/l bis 50 mmol/l; |
| b) Dialkylcarbonat und/oder Alkylencarbonat: | >10 mmol/l bis 50 mmol/l; |
| c) OH⁻: | 20 mmol/l bis 100 mmol/l, |
**dadurch gekennzeichnet, dass** man mindestens eine Substanz zur Reaktionsmischung zugibt, die eine Molmasse größer 100 g/mol aufweist und der Formel R-Xₙ genügt, wobei der Rest R für einen mindestens ein Kohlenstoffatom umfassenden Rest steht, der Rest X für eine Gruppe steht, die mindestens ein Sauerstoffatom sowie mindestens ein Kohlenstoffatom, Schwefelatom, Phosphoratom und/oder Stickstoffatom umfasst und n eine vorzugsweise ganze Zahl im Bereich von 1 bis 20 darstellt, wobei man die Substanz nach Beginn der Reaktion zugibt, wobei man die Substanz bei einem pH-Wert der Reaktionsmischung im Bereich von 11,5 bis 10,0, gemessen bei der Reaktionstemperatur, zugibt.

11. Verfahren nach Anspruch 10, **dadurch gekennzeichnet, dass** man Propylencarbonat als Alkylencarbonat und Natriumhydroxid als OH⁻-Quelle einsetzt.

12. Verfahren zur Herstellung von Calciumcarbonat-Teilchen nach mindestens einem der vorangehenden Ansprüche 1 bis 9, bei welchem man Ca(OH)₂ mit Dialkylcarbonat und/oder Alkylencarbonat in Gegenwart von OH⁻-Ionen in wässriger Lösung umsetzt, wobei man die Komponenten in folgenden Konzentrationen einsetzt:
| | |
|---|---|
| a) Ca(OH)₂: | >5 mmol/l bis 25 mmol/l; |
| b) Dialkylcarbonat und/oder Alkylencarbonat: | >5 mmol/l bis 25 mmol/l, |
**dadurch gekennzeichnet, dass** man mindestens eine Substanz zur Reaktionsmischung zugibt, die eine Molmasse größer 100 g/mol aufweist und der Formel R-Xₙ genügt, wobei der Rest R für einen mindestens ein Kohlenstoffatom umfassenden Rest steht, der Rest X für eine Gruppe steht, die mindestens ein Sauerstoffatom sowie mindestens ein Kohlenstoffatom, Schwefelatom, Phosphoratom und/oder Stickstoffatom umfasst und n eine vorzugsweise ganze Zahl im Bereich von 1 bis 20 darstellt, wobei man die Substanz nach Beginn der Reaktion zugibt, wobei man die Substanz bei einem pH-Wert der Reaktionsmischung im Bereich von 11,5 bis 10,0, gemessen bei der Reaktionstemperatur, zugibt.

13. Verfahren nach Anspruch 12, **dadurch gekennzeichnet, dass** man Propylencarbonat als Alkylencarbonat und Natriumhydroxid und/oder Calciumhydroxid als OH⁻-Quelle einsetzt.

14. Verwendung von amorphen Calciumcarbonat-Teilchen nach mindestens einem der Ansprüche 1 bis 9 als Additiv oder Modifizierungsmittel in Papier, Farben, Kunststoffen, Tinten, Klebstoffen und Pharmazeutika.

15. Verwendung von amorphen Calciumcarbonat-Teilchen nach mindestens einem der Ansprüche 1 bis 9 als Komponente für die Herstellung von Polymer-Compounds.

16. Verwendung nach Anspruch 15, **dadurch gekennzeichnet, dass** die amorphen Calciumcarbonat-Teilchen als Komponente für die Herstellung von resorbierbaren Polymer-Compounds verwendet werden.

17. Polymer-Compound, enthaltend kugelförmige, amorphe Calciumcarbonat-Teilchen nach mindestens einem der Ansprüche 1 bis 9.

## Claims

1. Stabilised spherical, amorphous calcium carbonate particles with an average particle diameter in the range from 0.05 µm to 2.0 µm and a water content of not more than 5.0% by weight relative to the total weight thereof and measured as residual moisture at 200°C, **characterised in that**
a) the calcium carbonate particles contain at least one substance that has a molar mass greater than 100 g/mol and conforms to the formula R-Xₙ, wherein the radical R stands for a radical having at least one carbon atom, radical X stands for a group having at least one oxygen atom and at least one carbon atom, sulphur atom, phosphorus atom and/or nitrogen atom, and n preferably represents a whole number in the range from 1 to 20,
b) the fraction of crystalline calcium carbonate is less than 30% by weight, relative to the total weight of the calcium carbonate,
c) the specific surface area of the calcium carbonate particles is not more than 12 m²/g,
wherein the residual moisture, the fraction of crystalline calcium carbonate and the specific surface area of the calcium carbonate particles are determined as described in the specification.

2. The calcium carbonate particle according to claim 1, **characterised in that** the radical R stands for an aliphatic or cycloaliphatic radical, which may or may not contain additional radicals X, and which may or may not include one or more ether compounds.

3. The calcium carbonate particle according to claim 1 or 2, **characterised in that** the radical X stands for a
Carboxylic acid group -COOH,
Carboxylate group ∼COO⁻,
Sulphonic acid group ∼SO₃H,
Sulphonate group ∼SO₃⁻,
Bisulphate group -OSOsH,
Sulphate group ∼OSO₃⁻,
Phosphonic acid group ∼PO₃H₂,
Phosphonate group ∼PO₃H⁻, ∼PO₃²⁻,

4. The calcium carbonate particle according to claim 3, **characterised in that** the radical X stands for a carboxylic acid group, carboxylate group, phosphonic acid group, or a phosphonate group.

5. The calcium carbonate particle according to at least one of the preceding claims, **characterised in that** the substance is selected from alkyl carboxylic acids, alkylcarboxylates, alkylsulphonic acids, alkyl sulphonates, alkylsulphates, alkylether sulphates, fatty alcohol ethoxylates, alkylphenol ethoxylates, substituted or unsubstituted alkylphosphonic acids, substituted or unsubstituted alkylphosphonates, sorbitan fatty acid esters, alkylpolyglucosides, N-methylglucamides, homo- and copolymers of acrylic acid, and the corresponding salt forms and block copolymers thereof.

6. The calcium carbonate particle according to claim 5, **characterised in that** the substance is selected from amino-tri-(methylene phosphonic acid), 1-hydroxyethylene-(1,1-diphosphonic acid), ethylenediamino-tetra-(methylene phosphonic acid), hexamethylene diamino-tetra-(methylene phosphonic acid), diethylenetriamino-penta-(methylene phosphonic acid) or alkylphosphonates of the abovementioned acids.

7. The calcium carbonate particle according to claim 5, **characterised in that** the substance is selected from homopolymers of acrylic acid and the corresponding salt forms thereof, which have a weight averaged molecular weight in the range from 1,000 g/mol - 10,000 g/mol.

8. The calcium carbonate particle according to claim 5, **characterised in that** the substance is selected from polyethylene oxide or polypropylene oxide.

9. The calcium carbonate particle according to at least one of the preceding claims, **characterised in that** the substance is present in a quantity in the range from 0.1% by weight to 5.0% by weight, relative to the CaCO₃ content of the spherical calcium carbonate particles.

10. A process for producing calcium carbonate particles according to at least one of the preceding claims, in which Ca²⁺ ions in aqueous solution are reacted with dialkyl carbonate and/or alkylene carbonate in the presence of OH⁻ ions, wherein Ca(OH)₂ is not used as the OH⁻ source and the components are used in the following concentrations:
| | |
|---|---|
| a) Ca²⁺: | >10 mmol/l to 50 mmol/l; |
| b) Dialkyl carbonate and/or alkylene carbonate: | >10 mmol/l to 50 mmol/l; |
| c) OH⁻: | 20 mmol/l to 100 mmol/l, |
**characterised in that** at least one substance is added to the reaction mixture that has a molar mass greater than 100 g/mol and conforms to the formula R-Xₙ, wherein the radical R stands for a radical that contains at least one carbon atom, radical X stands for a group that includes at least one oxygen atom and at least one carbon atom, sulphur atom, phosphorus atom and/or nitrogen atom, and n preferably represents a whole number in the range from 1 to 20, wherein the substance is added when the reaction mixture has a pH value in the range from 11.5 to 10.0, measured at the reaction temperature.

11. The process according to claim 10, **characterised in that** propylene carbonate is used as the alkylene carbonate and sodium hydroxide and/or calcium hydroxide is used as the OH⁻ source.

12. The process for producing calcium carbonate particles according to at least one of the preceding claims 1 to 9, in which Ca(OH)₂ is reacted in aqueous solution with dialkyl carbonate and/or alkylene carbonate in the presence of OH⁻ions, the components are used in the following concentrations:
| | |
|---|---|
| a) Ca(OH)₂: | >5 mmol/l to 25 mmol/l; |
| b) Dialkyl carbonate and/or alkylene carbonate: | >5 mmol/l to 25 mmol/l, |
**characterised in that** at least one substance is added to the reaction mixture that has a molar mass greater than 100 g/mol and conforms to the formula R-Xₙ, wherein the radical R stands for a radical that contains at least one carbon atom, radical X stands for a group that includes at least one oxygen atom and at least one carbon atom, sulphur atom, phosphorus atom and/or nitrogen atom, and n preferably represents a whole number in the range from 1 to 20, wherein the substance is added when the reaction mixture has a pH value in the range from 11.5 to 10.0, measured at the reaction temperature.

13. The process according to claim 12, **characterised in that** propylene carbonate is used as the alkylene carbonate and sodium hydroxide and/or calcium hydroxide is used as the OH⁻ source.

14. Use of amorphous calcium carbonate particles according to at least one of claims 1 to 9 as an additive or modifier in paper, paints, plastics, inks, adhesives and pharmaceuticals.

15. Use of amorphous calcium carbonate particles according to at least one of claims 1 to 9 as a component in the manufacture of polymer compounds.

16. The use according to claim 15, **characterised in that** the amorphous calcium carbonate particles are used as a component for the production of resorbable polymer compounds.

17. A polymer compound containing spherical amorphous calcium carbonate particles according to at least one of claims 1 to 9.

## Revendications

1. Particules sphériques amorphes de carbonate de calcium stabilisées, d'un diamètre moyen des particules de l'ordre de 0,05 µm à 2,0 µm et avec une teneur en eau d'au plus 5,0 % en poids, rapportée à leur poids total et mesurée en tant qu'humidité résiduelle à 200°C, **caractérisées en ce que**
a) les particules de carbonate de calcium comprennent au moins une substance qui présente une masse molaire supérieure à 100 g/mole et qui satisfait à la formule R-Xₙ, le reste R étant mentionné pour un reste comprenant au moins un atome de carbone, le reste X étant mentionné pour un groupe qui comprend au moins un atome d'oxygène, ainsi qu'au moins un atome de carbone, un atome de soufre, un atome de phosphore et / ou un atome d'azote et n représentant un nombre de préférence entier, de l'ordre de 1 à 20,
b) la part en carbonate de calcium cristallin étant inférieure à 30 % en poids, rapportée au poids total du carbonate de calcium,
c) la surface spécifique des particules de carbonate de calcium étant d'au plus 12 m²/g,
tel que démontré dans la description, l'humidité résiduelle, la part de carbonate de calcium cristallin et la surface spécifique des particules de carbonate de calcium étant déterminées.

2. Particules de carbonate de calcium selon la revendication 1, **caractérisées en ce que** le reste R est mentionné pour un reste aliphatique ou cycloaliphatique, pouvant comprendre le cas échéant d'autres restes X et pouvant présenter le cas échéant une ou plusieurs liaisons éther.

3. Particules de carbonate de calcium selon la revendication 1 ou 2, **caractérisées en ce que** le reste X est mentionné pour un
groupe d'acide carboxylique -COOH,
groupe carboxylate ∼COO⁻,
groupe d'acide sulfonique ∼SO₃H,
groupe sulfonate ∼SO₃⁻,
groupe hydrogénosulfate ∼OSO₃H,
groupe sulfate ∼OSO₃⁻,
groupe d'acide phosphonique ∼PO₃H₂,
groupe phosphonate ∼PO₃H⁻ ou ~PO₃²⁻.

4. Particules de carbonate de calcium selon la revendication 3, **caractérisées en ce que** le reste X est mentionné pour un groupe d'acide carboxylique, un groupe carboxylate, un groupe d'acide phosphonique ou un groupe phosphonate.

5. Particules de carbonate de calcium selon au moins l'une quelconque des revendications précédentes, **caractérisées en ce que** la substance est sélectionnée parmi les acides alkylcarboxyliques, les acides alkylcarboxylates, les acides alkylsulfoniques, les alkylsulfonates, les alkylsulfates, les alkyléthersulfates, les éthoxylates d'alcool gras, les éthoxylates d'alkyl phénols, le cas échéant, les acides alkylphosphoniques substitués, le cas échéant, les alkylphosphonates substitués, les esters d'acides gras de sorbitanne, les alkylpolyglucosides, les n-méthylglucamides, les homopolymères et les copolymères de l'acide acrylique ainsi que leurs formes salines et copolymères blocs correspondants.

6. Particules de carbonate de calcium selon la revendication 5, **caractérisées en ce que** la substance est sélectionnée parmi l'acide amino-tri-(méthylènephosphonique), l'acide 1-hydroxyéthylène (1,1-diphosphonique), l'acide éthylène diamine-tetra-(méthylènephosphonique), l'acide hexaméthylène diamine-tetra-(méthylènephosphonique), l'acide diéthylènetriamine-penta-(méthylènephosphonique) ou les alkylphosphonates des acides précédemment cités.

7. Particules de carbonate de calcium selon la revendication 5, **caractérisées en ce que** la substance est sélectionnée parmi les homopolymères de l'acide acrylique, ainsi que leurs formes salines correspondantes, qui présentent une moyenne en poids moléculaire de l'ordre de 1.000 g/mole à 10.000 g/mole.

8. Particules de carbonate de calcium selon la revendication 5, **caractérisées en ce que** la substance est sélectionnée parmi l'oxyde de polyéthylène ou l'oxyde de polypropylène.

9. Particules de carbonate de calcium selon au moins l'une quelconque des revendications précédentes, **caractérisées en ce que** la substance est présente dans une quantité de l'ordre de 0,1 % en poids à 5,0 % en poids, rapportée à la teneur en CaCO₃ des particules de carbonate de calcium sphériques.

10. Procédé, destiné à produire des particules de carbonate de calcium selon au moins l'une quelconque des revendications précédentes, lors duquel l'on met en œuvre des ions de Ca²⁺ avec du dialkylcarbonate et / ou de l'alkylènecarbonate en présence d'ions OH⁻ en solution aqueuse, en n'utilisant pas du Ca(OH)₂ en tant que source d'OH⁻ et l'on utilise les composants dans les concentrations suivantes :
| | | |
|---|---|---|
| a) | Ca²⁺ : | > de 10 mmoles/l à 50 mmoles/l ; |
| b) | le dialkylcarbonate et / ou l'alkylènecarbonate : | > de 10 mmoles/l à 50 mmoles/l ; |
| c) | l'OH⁻ : | de 20 mmoles/l à 100 mmoles/l, |
**caractérisé en ce que** l'on ajoute au mélange réactif au moins une substance qui présente une masse molaire supérieure à 100 g/mole et qui satisfait à la formule R-Xₙ, le reste R étant mentionné pour un reste qui comprend au moins un atome de carbone, le reste X étant mentionné pour un groupe comprenant au moins un atome d'oxygène, ainsi qu'au moins un atome de carbone, un atome de soufre, un atome de phosphore et / ou un atome d'azote et n représentant un nombre de préférence entier, de l'ordre de 1 à 20, la substance étant rajoutée après le début de la réaction, la substance étant rajoutée à une valeur pH du mélange réactif de l'ordre de 11,5 à 10,0, mesurée à la température de réaction.

11. Procédé selon la revendication 10, **caractérisé en ce que** l'on utilise du carbonate de propylène en tant que carbonate d'alkylène et de l'hydroxyde de sodium en tant que source d'OH⁻.

12. Procédé, destiné à produire des particules de carbonate de calcium selon au moins l'une quelconque des revendications précédentes 1 à 9, lors duquel l'on met en œuvre du Ca(OH)₂ avec du dialkylcarbonate et / ou du carbonate d'alkylène en présence d'ions OH⁻ en solution aqueuse, les composants étant utilisés dans les concentrations suivantes :
| | |
|---|---|
| a) Ca(OH)₂: | > de 5 mmoles/l à 25 mmoles/l ; |
| b) dialkylcarbonate et / ou carbonate d'alkylène: | > de 5 mmoles/l à 25 mmoles/l, |
**caractérisé en ce que** l'on rajoute au mélange réactif une substance qui présente une masse molaire supérieure à 100 g/mole et qui satisfait à la formule R-Xₙ, le reste R étant mentionné pour un reste comprenant au moins un atome de carbone, le reste X étant mentionné pour un groupe qui comprend au moins un atome d'oxygène, ainsi qu'au moins un atome de carbone, un atome de soufre, un atome de phosphore et / ou un atome d'azote et n représentant un nombre de préférence entier, de l'ordre de 1 à 20, la substance étant rajoutée après le début de la réaction, la substance étant rajoutée à une valeur pH du mélange réactif de l'ordre de 11,5 à 10,0, mesurée à la température de réaction.

13. Procédé selon la revendication 12, **caractérisé en ce que** l'on utilise du carbonate de propylène en tant que carbonate d'alkylène et de l'hydroxyde de sodium et / ou de l'hydroxyde de calcium en tant que source d'OH⁻.

14. Utilisation de particules de carbonate de calcium amorphes selon au moins l'une quelconque des revendications 1 à 9 en tant qu'additif ou en tant qu'agent modificateur dans du papier, des peintures, des matières plastiques, des encres, des agents adhésifs et des produits pharmaceutiques.

15. Utilisation de particules de carbonate de calcium amorphes selon au moins l'une quelconque des revendications 1 à 9 en tant que composant pour la préparation de composites polymères.

16. Utilisation selon la revendication 15, **caractérisée en ce que** l'on utilise les particules de carbonate de calcium en tant que composants pour la préparation de composites polymères résorbables.

17. Composite polymère, contenant des particules sphériques amorphes de carbonate de calcium selon au moins l'une quelconque des revendications 1 à 9.
